# FASCICULE DE BREVET EUROPEEN

(11) **EP 4 042 058 B1**
(45) Date de publication et mention de la délivrance du brevet: **13.11.2024**
(21) Numéro de dépôt: 20796863.7
(22) Date de dépôt: 28.09.2020
(51) Int. Cl.: F16L 55/115, E03B 9/10, G01M 3/24

(54) **DISPOSITIF D'OBTURATION D'UN CONDUIT MUNI D'UN APPAREIL DE MESURE COMPRENANT UN EMETTEUR**
KANALABSPERRVORRICHTUNG MIT EINER MESSVORRICHTUNG MIT EINEM SENDER
DUCT SHUT-OFF DEVICE PROVIDED WITH A MEASURING DEVICE COMPRISING A TRANSMITTER

(30) Priorité: 10.10.2019 FR 1911280
(43) Date de publication de la demande: 17.08.2022
(73) Titulaire: A. Raymond et Cie, 38000 Grenoble (FR)
(72) Inventeur: DAVID, Matthieu, 38120 Saint-Egreve (FR); BIZZINI, Olivier, 38120 Saint-Egreve (FR)
(74) Mandataire: IP Trust
(86) Numéro de dépôt international: PCT/FR2020/051689
(87) Numéro de publication internationale: WO 2021/069812

(56) Documents cités:
- EP-A1- 0 777 076
- JP-A- 2015 143 442
- US-A1- 2013 036 796
- US-A1- 2017 237 158

## Description

### DOMAINE DE L'INVENTION

La présente invention concerne un dispositif d'obturation, tel qu'un bouchon d'une bouche à clé, d'un conduit dans lequel est logé un appareil de mesure comprenant un émetteur. Elle concerne plus particulièrement le domaine de la surveillance des canalisations, par exemple en vue de la détection de fuite de fluide.

### ARRIERE PLAN TECHNOLOGIQUE DE L'INVENTION

Pour des raisons de bonne gestion d'un réseau de distribution de fluide, la surveillance des canalisations est une opération nécessaire pour localiser des éventuelles fuites de fluide et cibler les interventions de maintenance. C'est notamment le cas pour le réseau de distribution d'eau.

On connaît des appareils de mesure de fuite d'eau exploitant une technique d'exploration acoustique ou électroacoustique. Cette technique consiste à écouter le bruit émis par la circulation de l'eau dans une canalisation par le biais, par exemple, d'un micro approché à proximité de la canalisation. La présence d'une fuite d'eau produit des ultrasons que l'appareil de mesure peut détecter afin de localiser la fuite. Cet appareil de mesure est généralement opéré par un technicien qui sonde le sol en se déplaçant pour tenter de localiser les fuites. Une telle solution ne permet pas d'assurer une surveillance en temps réel et à grande échelle d'un réseau de canalisation.

On connaît également des appareils de mesure autonomes, disposés à proximité immédiate des canalisations sous surveillance, typiquement au fond des conduits d'accès à ces canalisations (dont l'accès est protégé par une bouche à clé). Ces appareils de mesures sont capables de communiquer à distance. Pour obtenir cela, les appareils de mesure peuvent être dotés d'un dispositif de communication, tel qu'un émetteur radio fréquence. Des antennes relais sont généralement disposées à proximité des appareils de mesures pour réceptionner les données mesurées et transmises afin de les transmettre à un serveur distant d'un centre de surveillance du réseau.

Pour rappel, les bouches à clés sont des éléments coiffant les conduits généralement verticaux traversant le sol afin de rendre facilement accessible, depuis la surface, une canalisation enterrée, et plus particulièrement la portion de la canalisation comportant la vanne de contrôle d'alimentation.

La qualité de la transmission peut être dégradée et/ou affaiblie lorsque l'émetteur est éloigné de la surface, et notamment lorsque la canalisation est enterrée profondément. Il peut donc être nécessaire, pour une bonne transmission de l'information, de rapprocher les antennes relais des dispositifs de mesure et/ou d'amplifier le signal émis par les dispositifs de mesures. L'amplification du signal émis par les dispositifs de mesures entraine une consommation plus importante d'énergie et peut ainsi réduire l'autonomie de l'appareil de mesure qui devra être remplacé plus souvent.

Solidariser l'émetteur au bouchon (ou dispositif d'obturation) du conduit n'est généralement pas souhaitable, car l'émetteur pourrait être endommagé par des contraintes externes appliquées au bouchon telles que des vibrations, déformations, etc. Le document US2017237158 dévoile un bouchon pourvu d'un émetteur et d'antennes pour obturer une bouche d'incendie.

### OBJET DE L'INVENTION

Un but de l'invention est de proposer un dispositif d'obturation d'un conduit dans lequel est logé un appareil de mesure comprenant un émetteur, obviant aux inconvénients précités.

### BREVE DESCRIPTION DE L'INVENTION

En vue de la réalisation de ce but, l'objet de l'invention propose un dispositif d'obturation d'un conduit dans lequel est logé un appareil de mesure comprenant un émetteur, le dispositif d'obturation comprenant :
- une bague de liaison configurée pour s'assembler à l'émetteur;
- un couvercle configuré pour refermer le conduit et se clipper sur la bague de liaison et ainsi solidariser l'émetteur de l'appareil de mesure au dispositif d'obturation.

Selon d'autres caractéristiques avantageuses et non limitatives de l'invention, prises seules ou selon toute combinaison techniquement réalisable :
- la bague de liaison est configurée pour prévenir tout contact entre le couvercle et l'émetteur ;
- l'assemblage entre la bague de liaison et l'émetteur a une faible rigidité afin de limiter la transmission d'efforts ;
- la bague de liaison comprend une paroi périphérique destinée à entourer une surface périphérique de l'émetteur, la paroi périphérique de la bague de liaison comprenant :
   o sur une surface interne au moins un cran principal de retenue destiné à retenir la surface périphérique de l'émetteur assemblée à la bague de liaison ;
   o sur une surface externe au moins un cran secondaire de retenue destiné à interagir avec le couvercle et retenir l'émetteur assemblé au couvercle ;
- la bague de liaison présente un rebord interne, au moins présent sur une section du pourtour de la paroi périphérique susceptible de venir en butée contre une surface supérieure de l'émetteur lorsque la bague de liaison est assemblée à l'émetteur ;
- le rebord de la bague de liaison est présent sur tout le pourtour de la paroi périphérique ;
- le cran principal et le cran secondaire de retenue comprennent un premier plan incliné configuré pour faciliter leur clippage ;
- le cran secondaire comprend sur une extrémité inférieure un deuxième plan incliné configuré pour permettre le declippage du couvercle de la bague de liaison ;
- le couvercle comprend :
   o une paroi supérieure configurée pour recouvrir intégralement la surface supérieure de l'émetteur et le protéger de l'environnement extérieur ;
   o une paroi latérale portée par la paroi supérieure configurée pour entourer la paroi périphérique de la bague de liaison et permettre son clippage ;
- la paroi latérale du couvercle comprend au moins une ouverture pour accueillir le cran secondaire et permettre le clippage du couvercle à la bague de liaison ;
- la bague de liaison et le couvercle comprennent des moyens d'indexation afin d'assurer l'alignement de l'ouverture de la paroi latérale du couvercle avec le cran secondaire de la bague de liaison lors de leur assemblage ;
- la bague de liaison et le couvercle sont formés de matières ayant pour caractéristique de ne pas interagir avec les émissions électromagnétiques de l'émetteur ;
- la bague de liaison est formée d'un matériau présentant une rigidité inférieure au matériau dans lequel est formé le couvercle.

### BREVE DESCRIPTION DES FIGURES

D'autres caractéristiques et avantages de l'invention ressortiront de la description détaillée de l'invention qui va suivre en référence aux figures annexées sur lesquels :
[Fig. 1] La figure 1 représente une vue éclatée d'un dispositif d'obturation, conforme à l'invention, destiné à obturer un conduit dans lequel est logé un appareil de mesure comprenant un émetteur ;
Les figures 2A à 2C représentent une bague de liaison conforme à l'invention, respectivement selon une vue d'ensemble, selon une vue de dessous et selon une vue de côté ;
[Fig. 3A]

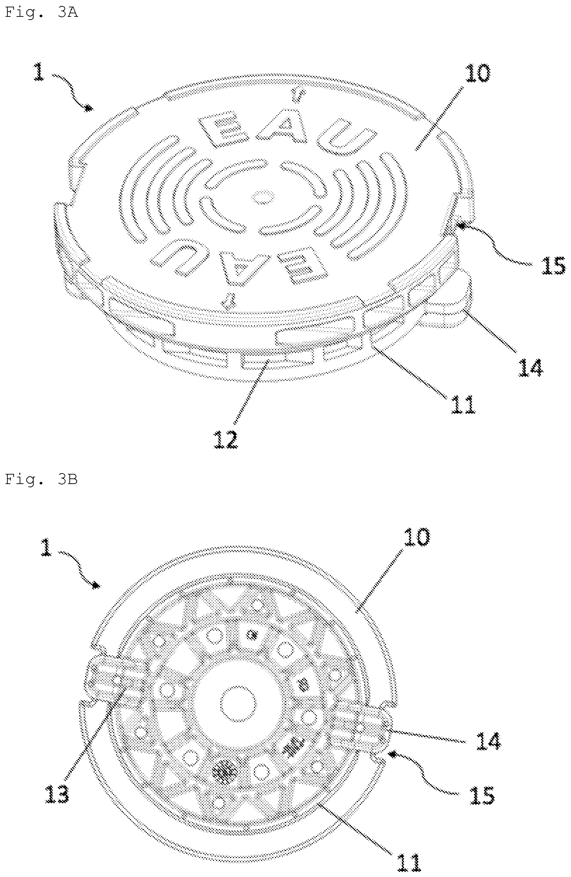

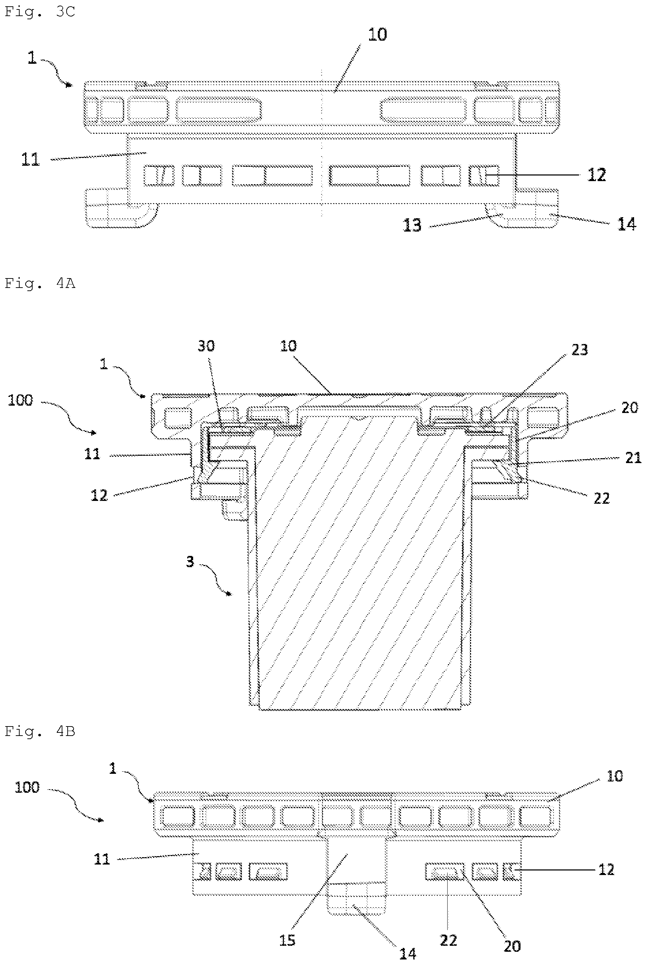

   Les figures 3A à 3C représentent un couvercle conforme à l'invention, respectivement selon une vue d'ensemble, selon une vue de dessous et selon une vue de côté ;
Les figures 4A et 4B représentent un dispositif d'obturation conforme à l'invention, respectivement selon une vue en coupe et selon une vue de profil ;

### DESCRIPTION DETAILLEE DE L'INVENTION

Les figures sont des représentations schématiques qui, dans un objectif de lisibilité, ne sont pas à l'échelle.

### Présentation générale du dispositif d'obturation

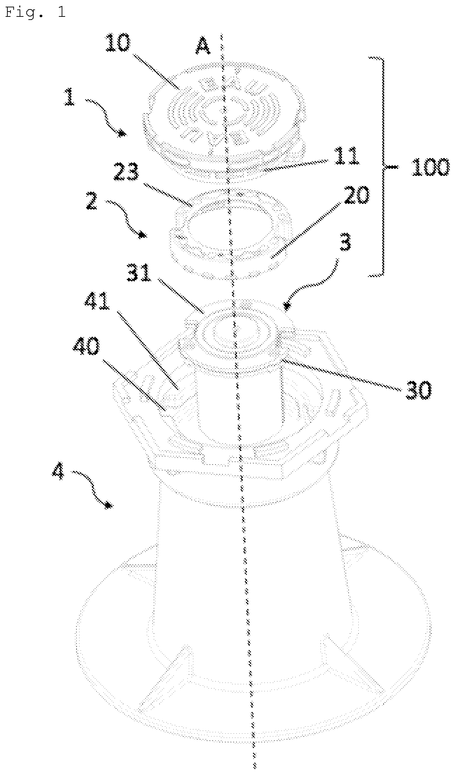

La figure 1 représente une vue éclatée d'un dispositif d'obturation 100, conforme à l'invention, destiné à obturer un conduit 4 dans lequel est logé un appareil de mesure (non représenté sur les figures) comprenant un émetteur 3.

Le conduit 4 peut être de nature variée, il s'agit ici sur la figure 1 d'une bouche à clé destinée à être intégrée à une chaussée ou à un trottoir, mais on pourrait également envisager d'autre type de conduit. De manière générale, il est possible d'utiliser le dispositif d'obturation 100 de l'invention pour obturer tout type d'ouverture.

L'appareil de mesure peut également être de nature variée, il peut par exemple s'agir d'un appareil de mesure pour l'exploration acoustique des canalisations pour la détection de fuite d'eau. Dans ce cas d'application, l'appareil de mesure peut prendre la forme d'un micro placé contre, ou à proximité, d'une canalisation à surveiller.

L'appareil de mesure est autonome et comprend pour cela un émetteur 3 afin de pouvoir transmettre ses mesures. De manière avantageuse, l'émetteur 3 est disposé sur une partie mobile du dispositif de mesure. Cette partie mobile est distincte de la partie responsable des mesures afin de permettre une plus grande liberté de placement de l'émetteur 3 par rapport à cette partie responsable de la mesure. Il est donc ainsi possible de placer l'émetteur 3 du dispositif de mesure au plus près de l'ouverture du conduit 4, i.e.de la chaussée ou du trottoir dans le cas de l'application décrite de l'invention, afin d'améliorer la qualité des transmissions. Pour réaliser cela, l'émetteur 3 est maintenu assemblé au dispositif d'obturation 100.

### Description du dispositif d'obturation

Le dispositif d'obturation 100 comprend un couvercle 1 ainsi qu'une bague de liaison 2. La bague de liaison 2 est configurée pour s'assembler à l'émetteur 3. Le couvercle 1 est configuré pour refermer le conduit 4 et se clipper sur la bague de liaison 2. On solidarise ainsi l'émetteur 3 de l'appareil de mesure au dispositif d'obturation 100.

La bague de liaison 2 a également pour rôle de protéger l'émetteur 3 des sollicitations externes appliquées sur le couvercle 1. La bague 2 est ainsi configurée pour prévenir tout contact entre le couvercle 1 et l'émetteur 3.

La bague de liaison 2 et le couvercle 1 sont avantageusement formés de matières ayant pour caractéristiques de ne pas interagir avec les émissions électromagnétiques de l'émetteur 3. Il s'agit donc de matières amagnétiques et électriquement isolantes, telles que les matières plastiques.

Le couvercle 1 doit également être formé d'un matériau très résistant aux sollicitations externes, telles que celles provoquées par le passage d'un véhicule, afin de préserver son intégrité. Le matériau formant le couvercle 1 est avantageusement choisi parmi les matériaux plastiques chargé de fibre de verre tel que le polyphthalamide (PPA), le polysulfure de phénylène (PPS), le polyamide 12 (PA12), polyamide 6 (PA6), etc.

La bague de liaison 2 est préférentiellement formée d'un matériau présentant une rigidité inférieure au matériau dans lequel est formé le couvercle 1. Le matériau formant la bague de liaison 2 présente avantageusement une dureté comprise entre 20 et 70 shore A afin de pouvoir se déformer et absorber les chocs et les vibrations qui seraient autrement transmises à l'émetteur 3. Le matériau formant la bague de liaison 2 est avantageusement un élastomère.

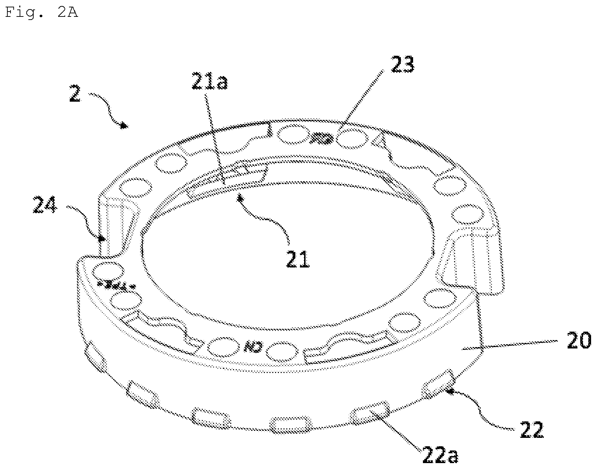

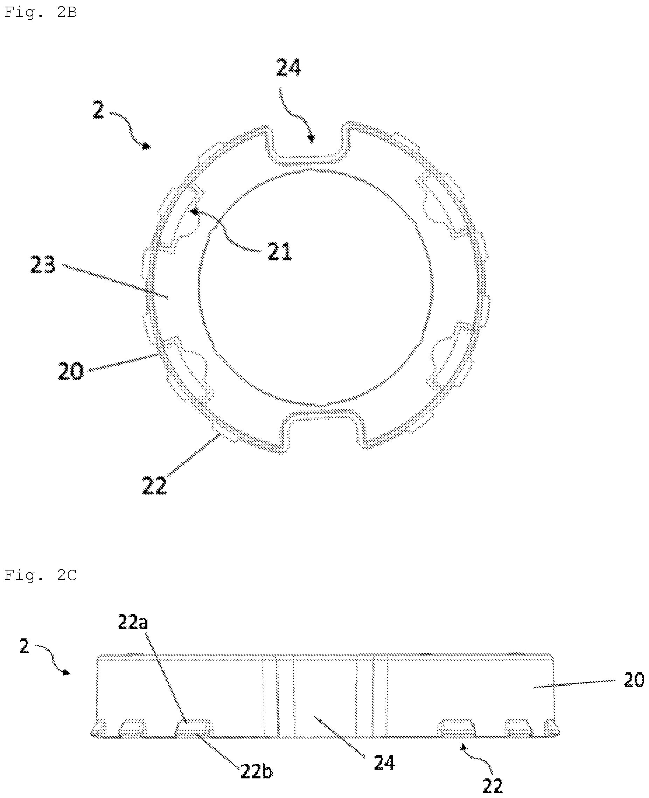

La forme de la bague de liaison 2 est choisie pour s'adapter à la forme de l'émetteur 3. Dans le cas de l'exemple représenté sur les figures 2A à 2C, la bague de liaison 2 est de forme générale annulaire. Elle comprend une paroi périphérique 20 destinée à entourer une surface périphérique 30 de l'émetteur 3. La paroi périphérique 20 de la bague de liaison 2 ne recouvre pas nécessairement l'intégralité de la surface périphérique 30 de l'émetteur 3, et elle peut n'entourer qu'une portion de cette surface, par exemple celle proche de la surface supérieure 31 de l'émetteur 3.
Comme on l'a déjà énoncé, la bague de liaison 2 est configurée pour s'assembler à l'émetteur 3.

La paroi périphérique 20 de la bague de liaison 2 peut ainsi comprendre sur sa face interne au moins un cran principal de retenue 21, ici quatre crans principaux de retenue 21, destiné à interagir avec la surface périphérique 30 de l'émetteur 3. Celle-ci peut comprendre des éléments, tels que des encoches, des cavités, des nervures ou des rainures, afin de permettre le clippage du cran principal 21. Dans l'exemple décrit, cet élément prend la forme d'un collet définissant un épaulement sur lequel le cran principal 21 de la bague de liaison 2 peut se clipper. De manière avantageuse, le cran principal 21 comprend un premier plan incliné 21a pour faciliter son clippage sur l'émetteur 3. D'autres modes d'assemblage sont bien évidemment possibles, par exemple par verrouillage du type « quart de tour » de la bague de liaison 2 à l'émetteur 3.

La paroi périphérique 20 de la bague de liaison 2 comprend également sur sa surface externe au moins un cran secondaire de retenue 22, ici douze crans secondaires de retenue 22, destiné à interagir avec le couvercle 1 et retenir l'émetteur 3 assemblé au couvercle 1.
De manière avantageuse, le cran secondaire 22 comprend un premier plan incliné 22a pour faciliter son clippage sur le couvercle 1. Le cran secondaire 22 peut comprendre également, sur une extrémité inférieure, un deuxième plan incliné 22b configuré pour permettre le declippage du couvercle 1 de la bague 2. Par souci de clarté, on précise que les termes « supérieur » et « inférieur » sont définis relativement au sens d'insertion dans le conduit 4 du dispositif d'obturation 100, selon un axe principal A.

En permettant le déclippage de la bague 2 du couvercle 1, on préserve l'intégrité du dispositif de mesure lors de l'ouverture du dispositif d'obturation 100. On évite ainsi de détériorer l'émetteur ou le câble de liaison le reliant au reste du dispositif de mesure, lorsque le dispositif d'obturation est déplacé pour dégager l'accès au conduit.

La bague de liaison 2 présente un rebord interne 23, au moins présent sur une section du pourtour de la paroi périphérique 20. Ce rebord interne 23 est susceptible de venir en butée contre la surface supérieure 31 de l'émetteur 3 lorsque la bague de liaison 2 est assemblée à l'émetteur 3. Comme cela est très visible sur la figure 2B, le rebord 23 peut être présent sur tout le pourtour de la paroi périphérique 20. Alternativement, il peut être composé de sections indépendantes, par exemple trois sections indépendantes. La paroi périphérique 20 et le rebord interne 23 définissent un logement permettant d'accueillir une partie au moins de l'émetteur.

L'assemblage entre la bague de liaison 2 et l'émetteur 3 a une faible rigidité afin de limiter la transmission d'effort entre ces deux éléments et permettre leur clippage. Par « faible rigidité », on signifie qu'il peut exister un jeu, permettant leur mouvement selon l'axe principal A après leur assemblage.

En référence aux figures 3A à 3C, le couvercle 1 comprend une paroi supérieure 10 et une paroi latérale 11. La paroi supérieure 10 présente une dimension suffisante pour recouvrir intégralement la surface supérieure 31 de l'émetteur 3 et le protéger de l'environnement extérieur.

De manière avantageuse, comme cela est représenté sur la figure 3B, la surface inférieure de la paroi supérieure 10 peut comprendre une pluralité de nervures afin de répartir les efforts appliqués sur le couvercle 1 et d'améliorer sa rigidité.

De manière également avantageuse, la paroi supérieure 10 présente une forme légèrement convexe pour éviter la formation d'une pellicule d'eau sur le couvercle 1, ce qui pourrait réduire la qualité de la transmission électromagnétique. Elle peut être structurée pour avoir des propriétés antidérapantes.

La paroi supérieure 10 peut également comporter des encoches de démontage 15 afin de permettre l'introduction de la tête d'un outil entre le couvercle 1 et le conduit 4 pour faciliter le retrait du dispositif d'obturation 100.

De manière optionnelle, la paroi supérieure 10 du couvercle 1 peut comprendre des extrusions et/ou cavités afin de réduire la quantité de matière utilisée, ainsi que le poids, du couvercle 1.

La paroi latérale 11 est portée par la paroi supérieure 10. Elle est configurée pour entourer la paroi périphérique 20 de la bague de liaison 2 afin de permettre son clippage. La paroi latérale 11 comprend au moins une ouverture 12, ici douze ouvertures 12, pour accueillir le ou les cran(s) secondaire(s) 22 de la bague de liaison 2.

Avantageusement, la bague de liaison 2 et le couvercle 1 comprennent des moyens d'indexation 13,24 afin de faciliter l'alignement des ouvertures 12 de la paroi latérale 11 du couvercle 1 avec les crans secondaires 22 de la bague de liaison 2 lors de leur assemblage. Ces moyens d'indexation sont ici formés par des encoches d'indexation 24 disposées sur la paroi périphérique 20 de la bague 2, ainsi que par des crans 13 disposés sur la face interne de la paroi latérale 11 du couvercle 1. Alternativement, on pourrait également envisager d'utiliser la forme de la bague de liaison 2 comme moyen d'indexation, en choisissant le contour de la paroi périphérique 20 pour qu'il n'ait pas de symétrie de révolution, par exemple un contour carré ou rectangulaire.

De manière optionnelle, la paroi latérale 11 du couvercle 1 comprend également, sur sa face extérieure, des éléments de verrouillage 14, ici des ergots 14 permettant le verrouillage du dispositif d'obturation 100 au conduit 4 par rotation quart de tour. Le conduit 4 comprend dans ce cas une nervure 41 munie d'encoches 40 pour permettre la traversée et la rotation des ergots 14 sous la nervure 41.

De manière avantageuse, la jonction entre la paroi supérieure 10 et la paroi latérale 11 du couvercle 1 forme un épaulement. La surface inférieure de la paroi supérieure 10 du couvercle peut ainsi venir en butée avec une partie du conduit 4 et ainsi limiter l'enfoncement du dispositif d'obturation 100 dans le conduit 4.

### Mise en oeuvre du dispositif d'obturation

Dans une première étape, on assemble la bague de liaison 2 à l'émetteur 3. Pour cela, la bague de liaison 2 est insérée, selon l'axe principal A, sur l'émetteur 3 afin de clipper les crans principaux de retenue 21 sur la surface périphérique 30 de l'émetteur 3. Durant l'insertion de la bague de liaison 2 sur l'émetteur 3, les premiers plans inclinés 21a des crans principaux 21 guident la déformation de la bague de liaison 2 pour permettre le clippage. L'insertion de la bague de liaison 2 sur l'émetteur 3 est stoppée lorsque le rebord interne 23 vient en butée contre la surface supérieure 31 de l'émetteur 3.

Dans une deuxième étape, on assemble le couvercle 1 à l'ensemble formé de la bague de liaison 2 et de l'émetteur 3. Le couvercle 1 est inséré, selon l'axe principal A, sur la bague de liaison 2 de manière à faire coïncider les moyens d'indexations 13,24 pour aligner les ouvertures 12 avec les crans secondaires 22. Le premier plan incliné 22a des crans secondaires 22 guide la déformation de la bague de liaison 2 pour permettre le clippage des crans secondaires 22 dans les ouvertures 12.

À l'issue de ces deux étapes, l'émetteur 3 est solidarisé au dispositif d'obturation 100, comme cela est représenté sur les figures 4A et 4B. Dans cette configuration, on rappelle qu'il n'y a pas de contact entre l'émetteur 3 et le couvercle 1 et qu'un jeu de mouvement, selon l'axe principal A, peut exister entre la bague de liaison 2 et l'émetteur 3.

Dans une troisième étape, on installe l'appareil de mesure dans le conduit 4 et on assemble le dispositif d'obturation 100 (muni de l'émetteur 3) au conduit 4, par exemple par verrouillage quart de tour. Les ergots 14 du couvercle 1 sont alignés avec les encoches 40 du conduit 4, lors de l'insertion du dispositif d'obturation 100 dans le conduit 4, puis une rotation est appliquée sur le couvercle 1. Cette rotation permet de faire tourner les ergots 14 sous la rainure 41 du conduit pour désaligner les ergots 14 des encoches 40 afin de prévenir le retrait du dispositif d'obturation 100 du conduit 4. La paroi supérieure 10 du couvercle 1 vient en butée, au niveau de l'épaulement, contre la nervure 41 pour limiter l'enfoncement du dispositif d'obturation 1 dans le conduit 4 et obturer le conduit 4.

À l'issue de cette étape, l'émetteur 3 est ainsi disposé au plus proche de l'ouverture du conduit 4 et par conséquent de la surface. La proximité de l'émetteur 3 avec la surface, ainsi que la nature des matériaux composant les éléments du dispositif d'obturation 100 n'interagissant pas avec les émissions électromagnétiques, permettent d'assurer une transmission optimale des données relevées par l'appareil de mesure. De plus, l'émetteur 3 est protégé de l'environnement extérieur par le couvercle 1 et par la bague de liaison 2 qui atténue, grâce à sa nature flexible, les vibrations et chocs subis par le couvercle 1. L'émetteur 3 est ainsi protégé de l'influence des perturbations extérieures.

Le démontage du dispositif d'obturation 100 du conduit 4 consiste à réaliser les opérations inverses de la troisième étape précédemment décrite. Il s'agit donc ici d'appliquer une rotation sur le couvercle 1 pour réaligner les ergots 14 avec les encoches 40 pour pouvoir sortir le dispositif d'obturation 100 du conduit 4. L'extrémité d'un outil peut être insérée dans les encoches de démontage 15 du couvercle pour faciliter la rotation du couvercle 1.

Si un effort excessif est exercé sur l'émetteur 3 lors du démontage, par exemple dans le cas où la partie mesure de l'appareil de mesure à laquelle est lié l'émetteur est bloquée au fond du conduit, le deuxième plan incliné 22b des crans secondaires de retenus 22 guide la déformation de la bague de liaison 2 pour désolidariser la bague de liaison 2 du couvercle 1. On préserve ainsi l'intégrité de l'appareil de mesure en évitant d'arracher l'émetteur 3 de l'appareil de mesure.
Bien entendu l'invention n'est pas limitée au mode de mise en oeuvre décrit et on peut y apporter des variantes de réalisation sans sortir du cadre de l'invention tel que défini par les revendications.

## Revendications

1. Dispositif d'obturation (100) d'un conduit (4) dans lequel est logé un appareil de mesure comprenant un émetteur (3), le dispositif d'obturation (100) comprenant :
- une bague de liaison (2) formée d'une paroi périphérique (20) et d'un rebord interne (23), au moins présent sur une section du pourtour de la paroi périphérique (20), définissant un logement permettant d'accueillir une partie au moins de l'émetteur (3) ;
- un couvercle (1) configuré pour refermer le conduit (4) et se clipper sur la bague de liaison (2) et ainsi solidariser l'émetteur (3) de l'appareil de mesure au dispositif d'obturation (100)
le dispositif d'obturation étant **caractérisé en ce que** la paroi périphérique (20) de la bague de liaison (2) comprend :
- sur une surface interne au moins un cran principal de retenue (21) destiné à retenir la surface périphérique (30) de l'émetteur (3) assemblée à la bague de liaison (2) ;
- sur une surface externe au moins un cran secondaire de retenue (22) destiné à interagir avec le couvercle (1) et retenir l'émetteur (3) assemblé au couvercle (1).

2. Dispositif d'obturation (100) selon la revendication précédente dans lequel la bague de liaison (2) est configurée pour prévenir tout contact entre le couvercle (1) et l'émetteur (3).

3. Dispositif d'obturation (100) selon l'une des revendications précédentes dans lequel l'assemblage entre la bague de liaison (2) et l'émetteur (3) a une faible rigidité afin de limiter la transmission d'efforts.

4. Dispositif d'obturation (100) selon l'une des revendications précédentes dans lequel le rebord (23) de la bague de liaison (2) est présent sur tout le pourtour de la paroi périphérique (20).

5. Dispositif d'obturation (100) selon l'une des revendications précédentes dans lequel le cran principal (21) et le cran secondaire (22) de retenue comprennent un premier plan incliné (21a, 22a) configuré pour faciliter leur clippage.

6. Dispositif d'obturation (100) selon l'une des revendications 4 à 5 dans lequel le cran secondaire (22) comprend sur une extrémité inférieure un deuxième plan incliné (22b) configuré pour permettre le declippage du couvercle (1) de la bague de liaison (2).

7. Dispositif d'obturation (100) selon l'une des revendications 1 à 7 dans lequel le couvercle (1) comprend :
- une paroi supérieure (10) configurée pour recouvrir intégralement la surface supérieure (31) de l'émetteur (3) et le protéger de l'environnement extérieur ;
- une paroi latérale (11) portée par la paroi supérieure (10) configurée pour entourer la paroi périphérique (20) de la bague de liaison (2) et permettre son clippage.

8. Dispositif d'obturation (100) selon la revendication précédente dans lequel la paroi latérale (11) du couvercle (1) comprend au moins une ouverture (12) pour accueillir le cran secondaire (22) et permettre le clippage du couvercle (1) à la bague de liaison (2).

9. Dispositif d'obturation (100) selon la revendication précédente dans lequel la bague de liaison (2) et le couvercle (1) comprennent des moyens d'indexation (13, 24) afin d'assurer l'alignement de l'ouverture (12) de la paroi latérale (11) du couvercle (1) avec le cran secondaire (22) de la bague de liaison (2) lors de leur assemblage.

10. Dispositif d'obturation (100) selon l'une des revendications précédentes dans lequel la bague de liaison (2) et le couvercle (1) sont formés de matières ayant pour caractéristique de ne pas interagir avec les émissions électromagnétiques de l'émetteur (3).

11. Dispositif d'obturation (100) selon l'une des revendications précédentes dans lequel la bague de liaison (2) est formée d'un matériau présentant une rigidité inférieure au matériau dans lequel est formé le couvercle (1) .

## Patentansprüche

1. Vorrichtung zum Verschließen (100) einer Leitung (4), in der eine Messeinrichtung aufgenommen ist, umfassend einen Sender (3), die Verschlussvorrichtung (100) umfassend:
- einen Verbindungsring (2), der aus einer Umfangswand (20) und aus einem Innenrand (23) ausgebildet ist, der mindestens auf einem Abschnitt des äußeren Umfangs der Umfangswand (20) vorhanden ist, die eine Aufnahme ausbilden, die es ermöglicht, mindestens einen Teil des Senders (3) unterzubringen;
- eine Abdeckung (1), die zum Zumachen der Leitung (4) und sich Einclipsen an den Verbindungsring (2) und so Befestigen des Senders (3) der Messeinrichtung an der Verschlussvorrichtung (100) konfiguriert ist
wobei die Verschlussvorrichtung **dadurch gekennzeichnet ist, dass** die Umfangswand (20) des Verbindungsrings (2) umfasst:
- auf einer Innenoberfläche mindestens eine Haupthaltekerbe (21), die dazu bestimmt ist, die Umfangsoberfläche (30) des Senders (3) zu halten, der an dem Verbindungsring (2) montiert ist;
- auf einer Außenoberfläche mindestens eine Nebenhaltekerbe (22), die dazu bestimmt ist, mit der Abdeckung (1) zusammenzuwirken und den Sender (3) zu halten, der an der Abdeckung (1) montiert ist.

2. Verschlussvorrichtung (100) nach dem vorstehenden Anspruch, wobei der Verbindungsring (2) zum Verhindern jeglichen Kontakts zwischen der Abdeckung (1) und dem Sender (3) konfiguriert ist.

3. Verschlussvorrichtung (100) nach einem der vorstehenden Ansprüche, wobei die Montage zwischen Verbindungsring (2) und Sender (3) eine geringe Steifigkeit besitzt, um die Kraftübertragung zu begrenzen.

4. Verschlussvorrichtung (100) nach einem der vorstehenden Ansprüche, wobei der Rand (23) des Verbindungsrings (2) über den gesamten äußeren Umfang der Umfangswand (20) vorhanden ist.

5. Verschlussvorrichtung (100) nach einem der vorstehenden Ansprüche, wobei die Hauptkerbe (21) und die Nebenhaltekerbe (22) eine erste geneigte Ebene (21a, 22a) umfassen, die zum Erleichtern ihres Einclipsens konfiguriert ist.

6. Verschlussvorrichtung (100) nach einem der Ansprüche 4 bis 5, wobei die Nebenkerbe (22) an einem unteren Ende eine zweite geneigte Ebene (22b) umfasst, die zum Ermöglichen des Ausclipsens der Abdeckung (1) von dem Verbindungsring (2) konfiguriert ist.

7. Verschlussvorrichtung (100) nach einem der vorstehenden Ansprüche 1 bis 7, wobei die Abdeckung (1) umfasst:
- eine obere Wand (10), die zum vollständigen Bedecken der oberen Oberfläche (31) des Senders (3) und Schützen davon vor der äußeren Umgebung konfiguriert ist;
- eine Seitenwand (11), die durch die obere Wand (10) getragen wird und zum Umgeben der Umfangswand (20) des Verbindungsrings (2) und Ermöglichen dessen Einclipsen konfiguriert ist.

8. Verschlussvorrichtung (100) nach dem vorstehenden Anspruch, wobei die Seitenwand (11) der Abdeckung (1) mindestens eine Öffnung (12) zum Unterbringen der Nebenkerbe (22) und Ermöglichen des Einclipsens der Abdeckung (1) an dem Verbindungsring (2) umfasst.

9. Verschlussvorrichtung (100) nach dem vorstehenden Anspruch, wobei der Verbindungsring (2) und die Abdeckung (1) Indexierungsmittel (13, 24) umfassen, um die Ausrichtung der Öffnung (12) der Seitenwand (11) der Abdeckung (1) mit der Nebenkerbe (22) des Verbindungsrings (2) bei deren Montage sicherzustellen.

10. Verschlussvorrichtung (100) nach einem der vorstehenden Ansprüche, wobei der Verbindungsring (2) und die Abdeckung (1) aus Materialien ausgebildet sind, die als Eigenschaft besitzen, dass sie nicht mit den elektromagnetischen Emissionen des Senders (3) interagieren.

11. Verschlussvorrichtung (100) nach einem der vorstehenden Ansprüche, wobei der Verbindungsring (2) aus einem Material ausgebildet ist, das eine geringere Steifigkeit als das Material vorweist, aus dem die Abdeckung (1) ausgebildet ist.

## Claims

1. A shut-off device (100) for a duct (4), in which a measuring device comprising a transmitter (3) is housed, the shut-off device (100) comprising:
- a connecting ring (2) formed of a peripheral wall (20) and an inner rim (23), present on at least one section of the periphery of the peripheral wall (20), defining a recess for accommodating at least one portion of the transmitter (3);
- a cover (1) configured to close the duct (4) and clip onto the connecting ring (2) and thus rigidly connect the transmitter (3) of the measuring device to the shut-off device (100)
the shut-off device being **characterized in that** the peripheral wall (20) of the connecting ring (2) comprises:
- on an inner surface, at least one main retaining notch (21) intended to keep the peripheral surface (30) of the transmitter (3) assembled with the connecting ring (2);
- on an outer surface, at least one secondary retaining notch (22) intended to interact with the cover (1) and keep the transmitter (3) assembled with the cover (1).

2. The shut-off device (100) according to the preceding claim, wherein the connecting ring (2) is configured to prevent any contact between the cover (1) and the transmitter (3).

3. The shut-off device (100) according to any of the preceding claims, wherein the assembly between the connecting ring (2) and the transmitter (3) has low rigidity in order to limit the transmission of forces.

4. The shut-off device (100) according to any of the preceding claims, wherein the rim (23) of the connecting ring (2) is present over the entire periphery of the peripheral wall (20).

5. The shut-off device (100) according to any of the preceding claims, wherein the main retaining notch (21) and the secondary retaining notch (22) comprise a first inclined plane (21a, 22a) configured to facilitate the clipping thereof.

6. The shut-off device (100) according to any of claims 4 to 5, wherein the secondary notch (22) comprises, on a lower end, a second inclined plane (22b) configured to enable the cover (1) to be unclipped from the connecting ring (2).

7. The shut-off device (100) according to any of claims 1 to 7, wherein the cover (1) comprises:
- an upper wall (10) configured to completely cover the upper surface (31) of the transmitter (3) and to protect it from the external environment;
- a side wall (11) borne by the upper wall (10), configured to surround the peripheral wall (20) of the connecting ring (2) and to allow the clipping thereof.

8. The shut-off device (100) according to the preceding claim, wherein the side wall (11) of the cover (1) comprises at least one opening (12) for accommodating the secondary notch (22) and allowing the cover (1) to be clipped onto the connecting ring (2).

9. The shut-off device (100) according to the preceding claim, wherein the connecting ring (2) and the cover (1) comprise indexing means (13, 24) in order to ensure the alignment of the opening (12) of the side wall (11) of the cover (1) with the secondary notch (22) of the connecting ring (2) when they are assembled.

10. The shut-off device (100) according to any of the preceding claims, wherein the connecting ring (2) and the cover (1) are formed from materials having the characteristic of not interacting with the electromagnetic emissions from the transmitter (3).

11. The shut-off device (100) according to any of the preceding claims, wherein the connecting ring (2) is formed from a material having a lower rigidity than the material from which the cover (1) is formed.
